# EUROPÄISCHE PATENTANMELDUNG

(11) **EP 1 508 706 A1**
(43) Veröffentlichungstag der Anmeldung: **23.02.2005**
(21) Anmeldenummer: 04017295.9
(22) Anmeldetag: 22.07.2004
(51) Int. Cl.: F16B 12/44

(54) **Möbelelement**

(30) Priorität: 22.08.2003 DE 10339200
(71) Anmelder: Gnadler, Ekkehard, 18439 Stralsund (DE)
(72) Erfinder: Gnadler, Ekkehard, 18439 Stralsund (DE)
(74) Vertreter: Scheffler, Jörg, Dipl.-Ing.

(57) **Zusammenfassung**

Die Erfindung betrifft ein als Tisch ausgeführtes Möbelelement (1) mit horizontalen Zargen (2, 3), an dessen äußerer Ecke ein Verbindungsteil (5) zur Fixierung eines Beins (4) vorgesehen ist. Um den Montage- und Herstellungsaufwand sowie das Packvolumen der Bauelemente wesentlich zu verringern, wird erfindungsgemäß das Verbindungsteil (5) durch zwei flache, jeweils einer der beiden Zargen (2, 3) zugeordnete Verbindungselemente (6, 7) gebildet, die jeweils eine erste Fixierung (10) für das Bein (4) sowie eine zweite Fixierung (11) für die jeweils zugeordnete Zarge (2, 3) aufweisen. Dabei weisen die beiden Verbindungselemente (6, 7) einen zwischen der jeweils anderen Zarge (2, 3) und dem Bein (4) positionierten ersten Abschnitt (12) und einen, dem ersten Abschnitt (12) abgewandten zweiten Abschnitt (13) mit jeweils einer schlitzförmigen Aussparung (14) auf, mit welcher die beiden Verbindungselemente (6, 7) ineinander greifen.

## Beschreibung

Die Erfindung betrifft ein insbesondere als Tisch oder Stuhl ausgeführtes und insbesondere mit horizontalen Zargen ausgestattetes Möbelelement, welches mit zumindest einem an einer Ecke des Möbelelementes angeordneten, durch ein Verbindungsteil fixierten Bein ausgestattet ist, wobei das Verbindungsteil durch zwei flache, jeweils einer der beiden Zargen zugeordnete Verbindungselemente gebildet ist, die jeweils eine erste Fixierung für das Bein sowie eine zweite Fixierung für die jeweils zugeordnete Zarge aufweisen.

Ein solches Möbelelement mit einem Hohlpfosten zur Herstellung eines als Eckverbindung ausgeführten Verbindungsteils, insbesondere für einen Tisch oder einen Stuhl ist beispielsweise bereits durch die DE-GM 73 40 650 bekannt. Das Verbindungsteil ist dabei durch zwei flache Verbindungselemente gebildet, die über quer zur Längsrichtung angeordnete Schlitze mit einem Hohlpfosten verklemmt ist, indem die einander übergreifenden Enden mit ihren Stirnflächen an der Innenwand des Hohlpfostens anliegenden. Hierzu hat der Hohlpfosten innenliegende Nuten.

Als nachteilig erweist sich bei dieser Eckverbindung, dass der Einsatz auf Hohlpfosten aus Metall oder vergleichbare Werkstoffe beschränkt ist und daher die Anwendung bei massiven Beinen, beispielsweise als Holzwerkstoffen ausgeschlossen ist. Insbesondere das Einbringen der Nuten ist zudem mit erheblichem Aufwand verbunden, wie diese mit hoher Genauigkeit eingebracht werden müssen. Weiterhin erweist es sich als nachteilig, dass die so geschaffene Steckverbindung nur eine geringe Belastbarkeit erreicht werden kann und insbesondere weitere Fixierungen erforderlich sind, um das unbeabsichtigte auseinander fallen der Eckverbindung beim Anheben des Tisches oder Stuhles zu verhindern. Ein flexibler Einsatz des Verbindungsteiles ist zudem nicht möglich.

Durch die DE-GM 74 100 14 ist ein Verbindungswinkel für Zargenrahmen aus Metall-Hohlprofilen mit Beinen aus Holz oder Metall bei Tischen oder dergleichen bekannt. Der Verbindungswinkel hat dabei zwei Schenkel, die mit Hilfe eines Verbindungssteges verbunden sind, welcher eine Befestigungsbohrung für das Bein aufweist. Hierdurch wird der Vorteil erreicht, dass der Grundrahmen eines derart aufgebauten Tisches ein einheitliches Ganzes bildet und daher für den Transport als Fertigelement gut geeignet ist. Der so vorgefertigte Grundrahmen lässt sich auf diese Art und Weise am Aufstellungsort von jedem Laien ohne besondere Schwierigkeiten mit den Beinen verbinden.

Moderne Vertriebskonzepte für Möbel zielen jedoch zunehmend auf einen geringen Grad der Vormontage und insbesondere einfach und mit geringem Aufwand herzustellende Komponenten, die zudem ein minimales Verpackungsvolumen aufweisen müssen. Diese Anforderungen erfüllen Möbelelemente mit Verbindungswinkeln nach dem vorgenannt zitierten Stand der Technik jedoch nur unzureichend. Zudem bestehen bereits aus wirtschaftlichen Gründen Bestrebungen, auch in der Möbelindustrie dem Gleichteileprinzip einen hohen Stellenwert einzuräumen, um so die Teilevielfalt und damit zugleich die Herstellungs- und Lagerhaltungskosten zu verringern. Auch diese Anforderungen sind mit vorgefertigten Verbindungswinkeln nicht realisierbar.

Nach der DE 298 21 904 U1 sind im Inneren eines rohrförmigen Hohlkörpers zwei Tragprofile fest miteinander verbunden. Hierzu weist der Hohlkörper zwei Schlitze auf. Diese Bauform ist nur vergleichsweise umständlich zu realisieren.

Durch die DE 92 03 015 U1 ist es auch bekannt, ein Sitz- oder Tischmöbel mit horizontalen Trägem auszustatten, wobei das Bein eine Kreuznut aufweist, welche die lösbar durch eine Steckverbindung verbundenen Träger aufnimmt.

Als nachteilig erweist sich hierbei einerseits die Materialschwächung, die mit dem Einbringen einer Kreuznut in den Endbereich des Beins verbunden ist, sowie der erhebliche, dadurch bedingte Herstellungsaufwand. Zudem müssen weitere Verbindungen zwischen den Trägern und dem Bein vorgesehen werden, um ein unbeabsichtigtes Lösen der Verbindung zu vermeiden.

Ferner ist durch die DE 75 22 284 ein Möbel bestehend aus einem mit Außenzargen versehenen Korpus und daran befestigten Beinen bekannt. Beide Zargen haben eine Aussparung, in die ein Bügel eingreift, der als Widerlager für eine durch das Bein hindurchreichenden Schraube dient.

Die FR 985 658 beschreibt ein Möbelelement mit einem durch ein Verbindungsteil fixierten Bein, wobei das Verbindungsteil zugleich die beiden Zargen als auch das Bein verbindet. Das Verbindungsteil hat hierzu eine schlitzförmige Ausnehmung, durch die ein Gewindeabschnitt eines mit dem Bein verbundenen Bolzens hindurch geführt und mittels einer Flügelmutter fixiert ist.

Gemäß der US 65 11 251 B 1 ist ein ähnliches Verbindungsteil zusätzlich mit einer Fixiermöglichkeit für eine Tischplatte versehen.

Die DE 89 01 759 beschreibt einen Bretter-Eckverbindungsriegel. Dieser dient jedoch nicht der Fixierung eines Beines. Ferner betrifft dieser Bretter-Eckverbindungsriegel kein Möbelstück.

Gemeinsam haben alle bei Möbelelementen eingesetzte Verbindungsteile den Nachteil, dass diese entweder als vorgefertigtes Formteil ausgeführt sind oder aber an dem jeweiligen Bein geeigneten Ausformungen vorgesehen werden müssen.

Der Erfindung liegt die Aufgabe zugrunde, ein Möbelelement mit einem Verbindungsteil derart auszuführen, dass sowohl bei der Herstellung als auch bei der Montage ein wesentlich geringer Aufwand entsteht. Weiterhin soll dabei ein geringes Packvolumen realisierbar sein und für beliebige Beine insbesondere ohne das vorherige Einbringen von Ausformungen einsetzbar sein.

Diese Aufgabe wird erfindungsgemäß mit einem Möbelelement gemäß den Merkmalen des Anspruchs 1 gelöst. Die Unteransprüche betreffen besonders zweckmäßige Weiterbildungen der Erfindung.

Erfindungsgemäß ist also ein Möbelelement vorgesehen, bei dem die beiden Verbindungselemente einen zwischen der jeweils anderen Zarge und dem Bein positionierten ersten Abschnitt und einen, dem ersten Abschnitt abgewandten zweiten Abschnitt mit jeweils einer Aussparung aufweisen, mit welcher die beiden Verbindungselemente ineinander greifen. Der Erfindung liegt die überraschende Erkenntnis zugrunden, dass für die Belastbarkeit des Möbelelementes nicht die Ausgestaltung des Schenkel des Winkelelementes - ob vorgefertigt oder aus mehreren Teilen formschlüssig zusammengesteckt - entscheidend ist, sondern dass die Stabilität des Möbel erfindungsgemäß dadurch erreicht werden kann, dass die beiden Zargen lediglich mittels der jeweiligen Verbindungselementes mit dem Bein verbunden sind, ohne dass dabei als Stabilitätskriterium die Verbindung der Verbindungselemente untereinander von Bedeutung ist. Vielmehr wird die Stabilität daher insbesondere auch dann in gewünschter Weise erreicht, wenn die beiden Verbindungselemente einander nicht berühren oder zumindest keine belastbare Verbindung eingehen. Die Möbelbauteile Bein und Zarge werden dabei durch das jeweilige Verbindungselement auf Abstand gehalten, wodurch sich die so geschaffene Konstruktion in Widerspruch zu der in der Fachwelt bisher verankerten Auffassung von Gestaltungsprinzipien setzt. Aufgrund dieses Konstruktionsprinzips ergibt sich eine überraschend einfache Gestaltung der flachen Winkelelemente, die lediglich eine Aussparung aufweisen und an beliebigen Zargen und Beinen mit geringem Aufwand fixierbar sind. Die Verbindungselemente sind dabei bei Zargen mit unterschiedlichen Abmessungen sowie bei beliebigen Winkelstellungen der benachbarten Zargen problemlos einsetzbar, so dass beispielsweise auch trapezförmige Tische mit entsprechendem Zargenwinkel mit dem gleichen Verbindungselementen realisiert werden können. Aufgrund des einfachen Konstruktionsprinzips können die Bauelemente mühelos ausgetauscht werden so dass sich eine hohe Servicefreundlichkeit ergibt. Weiterhin ergeben sich Rationalisierungseffekte, weil einzelne Elemente insbesondere als Standardbauelemente von Fremdlieferanten bezogen werden können. Die Gestaltungsvielfalt wird dadurch in bisher nicht realisierbarer Weise erweitert.

Eine besonders vorteilhafte Ausführungsform der vorliegenden Erfindung wird auch dadurch erreicht, dass die Aussparung schlitzförmig ausgeführt und entsprechend der Materialsstärke des jeweils anderen Verbindungselementes bemessen ist. Hierdurch ist die relative Position der Verbindungselemente zueinander durch die passgenaue Ausgestaltung der schlitzförmigen Aussparung festgelegt, wodurch eine wesentliche Vereinfachung der Montage erreicht wird. Eine passgenaue Fixierung ist dadurch auch von einem Laien möglich.

Dabei erweist es sich nach einer weiteren Ausgestaltung als besonders zweckmäßig, wenn die Verbindungselemente in einer gemeinsamen, zu der Ebene der Zargen parallelen Ebene angeordnet sind, um so neben einer hohen Qualitätsanmutung auch eine optimale Krafteinleitung der auf die Beinen wirkenden Belastung in die Zargen zu erreichen.

Hierzu ist es besonders günstig, wenn die Aussparung im Wesentlichen bis zur Längsmittelachse des Verbindungselementes reicht. Hierdurch entsteht durch eine einfache Steckverbindung das gewünschte Verbindungselement, dessen Verbindungselemente dabei zugleich in einer gemeinsamen Ebene angeordnet sind. Eine versehentliche Abweichung von der durch die Aussparungstiefe, insbesondere Schlitztiefe vorgegebenen Sollposition ist dabei weitgehend ausgeschlossen und zudem problemlos visuelle überprüfbar.

Eine andere besonders Erfolg versprechende Weiterbildung der vorliegenden Erfindung wird dadurch erreicht, dass die Verbindungselemente mit ihren Aussparungen formschlüssig ineinander greifen. Hierdurch wird in einfacher Weise eine fehlerhafte Montage vermieden.

Eine weitere besonders gewinnbringende Abwandlung wird auch dadurch erreicht, dass die Verbindungselemente übereinstimmend ausgeführt sind. Hierdurch können die Herstellungskosten erheblich gesenkt werden, weil auf diese Weise das Gleichteilprinzip realisiert werden kann. Die Verbindungselemente sind hierzu beispielsweise als übereinstimmende flache Metall oder Kunststoffstreifen ausgeführt, die zudem je nach Einsatzzweck auch symmetrische ausgeführt werden können. Zugleich wird die Montage vereinfacht, weil eine Auswahl des erforderlichen Verbindungselementes aufgrund der Baugleichheit entfällt.

Nach einer anderen, ebenfalls besonders Erfolg versprechenden Abwandlung weist zumindest eines der Verbindungselemente mehrere parallele Aussparungen auf. Hierdurch können die beiden Verbindungselemente durch die Auswahl der jeweils geeigneten Aussparung in definierten unterschiedlichen relativen Positionen, die zur Vereinfachung auch mit unterschiedlichen Markierungen versehen sein können, festgelegt werden und dadurch aus demselben Verbindungselementen unterschiedlichen Verbindungsteile erstellt werden. Beispielsweise können dadurch auch Zargen mit unterschiedlichen Querschnitten eingesetzt werden oder auch Beine mit einer asymmetrischen Querschnittskontur fixiert werden.

Eine besonders vorteilhafte Ausführungsform der Erfindung wird erfindungsgemäß dann erreicht, wenn zumindest eines der Verbindungselemente mit einer Stirnseite des ersten Abschnitts derart positioniert ist, dass diese mit einer Außenseite des Beines sowie der das jeweilige Verbindungselement einschließenden Zarge konturbündig abschließt. Hierdurch wird neben der technischen Funktion des Verbindungsteiles zugleich ein ästhetisches ansprechendes Erscheinungsbild realisiert, indem zwischen dem Bein und der Zarge die Stirnseite des Verbindungselementes sichtbar angeordnet ist. Die ästhetische Gestaltung geht dabei aus der Konstruktion hervor sowie zugleich auch umgekehrt die Konstruktion aus der ästhetischen Gestaltung hervorgeht. Dieses charakteristische Konstruktions- und Gestaltungsmerkmal kann so beispielsweise auch als Herkunftshinweis dienen. Die vertikale Ersteckung der Stirnseite entspricht dabei der Höhe der Zarge, so dass kein Hohlraum oder Spalt entsteht. Die Stirnfläche kann hierzu beispielsweise auch eine Beschichtung oder Färbung aufweisen. Zudem kann die Stirnfläche poliert oder gebürstet werden.

Der von den beiden Verbindungselementen eingeschlossene Winkel ist grundsätzlich nahezu beliebig stufenlos einstellbar und ist insbesondere durch die Querschnittsgeometrie des Beines bestimmt. Bei einer in der speziellen Ausgestaltung der vorliegenden Erfindung kreuzen sich die Verbindungselemente im Bereich der Aussparungen in einem 90°-Winkel kreuzen und erfüllen damit den in der Praxis vornehmen erwünschten Anwendungszweck. Es sind jedoch auch Abwandlungen denkbar, bei denen der Winkel durch einschieben von insbesondere keilförmigen Zwischenstücken wahlweise mit geringem Aufwand variiert werden kann, um so ein hohes Maß an Flexibilität beispielsweise im Büromöbelbereich zu erreichen. Auf einem einzigen in dieser Weise aufgebauten Gestell können so beispielsweise unterschiedliche Tischplatten aufgelegt werden und des Gestellt der Geometrie der Tischplatte angepasst werden.

Die Verbindungselemente weisen grundsätzlich eine flache Formgebung auf. Für Zargen mit einer beispielsweise gewölbten oder kreisförmigen Querschnittsfläche erweist sich jedoch eine Abwandlung als besonders praxisnah, bei der die Verbindungselemente eine dem Querschnittskontur der jeweiligen Zarge entsprechende Formgebung aufweisen. Hierdurch wird die Fixierung der Verbindungselemente an der Zarge wesentlich verbessert.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine perspektivische Darstellung eines erfindungsgemäßen Möbelelementes mit einem Verbindungsteil;
- Fig.2: eine vergrößerte Draufsicht auf ein Verbindungselement des in Figur 1 gezeigten Verbindungsteiles;
- Fig.3: in einer Explosionsdarstellung den Montagevorgang des in Figur 1 gezeigten Verbindungsteiles;
- Fig.4: eine abgewandelte Form eines mit dem in Figur 2 gezeigten Verbindungs-Elementes kombinierbaren Verbindungselementes;
- Fig.5: eine weitere Bauform eines mit den in den Figuren 2 oder 4 gezeigten Verbindungs-Elementen kombinierbaren Verbindungselementes;
- Fig.6: eine weitere Bauform eines erfindungsgemäßen Möbelelementes in einer Prinzip-Darstellung.

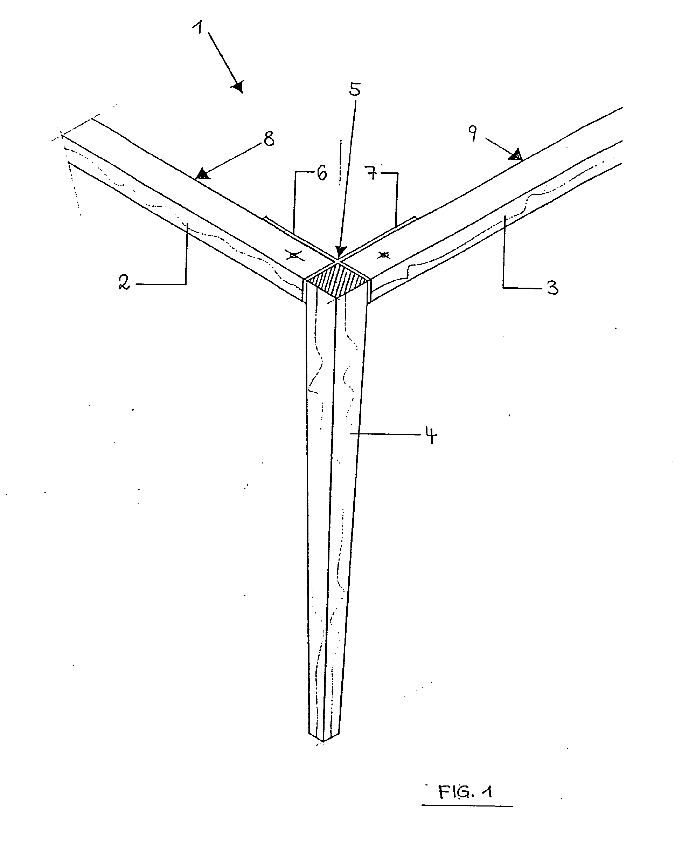

Figur 1 zeigt ein als Tisch ausgeführtes Möbelelement 1 in einer perspektivischen Darstellung. Das Möbelelement 1 weist horizontale Zargen 2, 3 auf, die ein an einer äußeren Ecke des Möbelelementes 1 positionierten als Tischbein ausgeführten Bein 4 einschließen. Das Bein 4 ist dabei durch ein Verbindungsteil 5 fixiert, welches durch zwei flache, jeweils einer der beiden Zargen zugeordnete Verbindungselemente 6, 7 gebildet ist. Die Verbindungselemente 6, 7 liegen dabei jeweils sowohl gegen eine Innenfläche 8, 9 der Zargen 2, 3 als auch zwischen der jeweils anderen Zarge 2, 3 und dem Bein 4 gegen diesen außenseitig an. Im Bereich des Beines 4 schließen die Verbindungselemente 6, 7 mit den Zargen 2, 3 und dem Bein 4 konturbündig ab und dienen dadurch zugleich als gestalterisches Element.

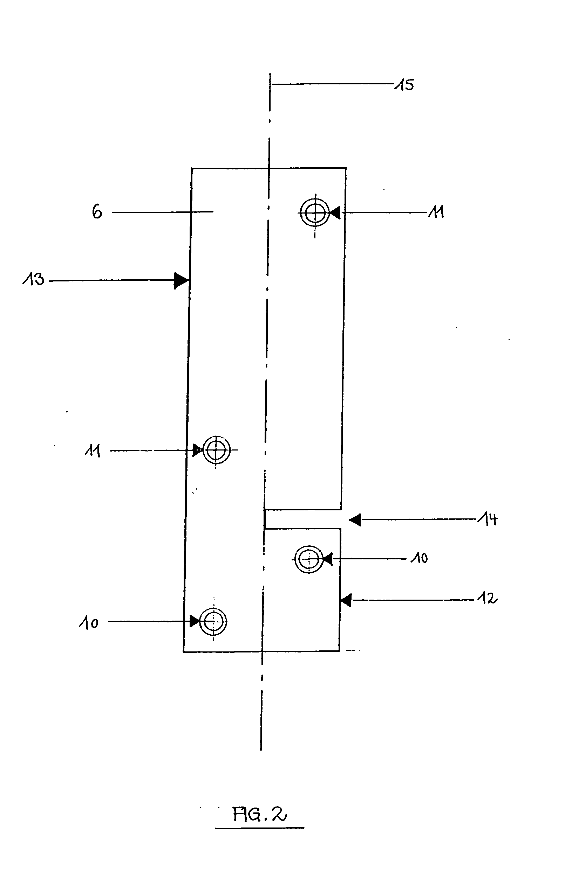

Figur 2 zeigt eine vergrößerte Draufsicht auf das in Figur 1 gezeigte Verbindungselement 6 des Möbelelementes 1. Zu erkennen ist eine durch zwei Durchbrechungen gebildete erste Fixierung 10 für das in Figur 1 gezeigten Bein 4 sowie eine zweite Fixierung 11 für die jeweils zugeordnete Zarge 2 in einem zweiten Abschnitt 13 des Verbindungselementes 6. Ein dem zweiten Abschnitt 13 abgewandter erster Abschnitt 12 des Verbindungselementes 6 ist mit der zweiten Fixierung 10 für das Bein 4 ausgestattet. Der zweite Abschnitt 13 weist eine schlitzförmige, an die Materialstärke des anderen Verbindungselementes 7 angepasste Aussparung 14 auf, mit welcher die beiden in Figur 1 gezeigten Verbindungselemente 6, 7 des Verbindungsteiles 5 einander kreuzen. Die Aussparung 14 reicht dabei bis zur Längsmittelachse 15 des Verbindungselementes 6.

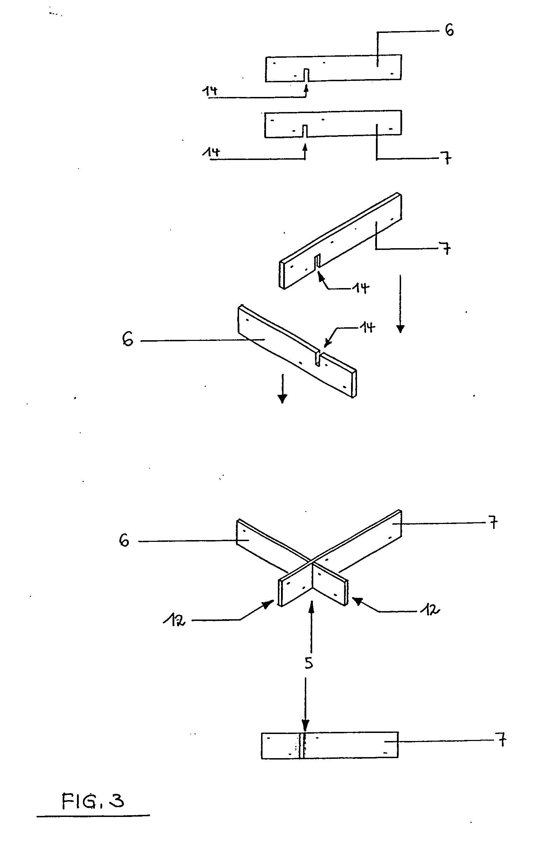

Figur 3 zeigt in einer Explosionsdarstellung den Ablauf der Montageschritte zur Herstellung des in Figur 1 gezeigten Verbindungsteiles 5. Die beiden baugleichen Verbindungselemente 6, 7 werden hierbei in einem 90° Winkel derart verbunden, dass die Aussparungen 14 ineinander greifen, um so eine formschlüssige Steckverbindung zu realisieren. Die Verbindungselemente 6, 7 des Verbindungsteiles 5 liegen dadurch in eine gemeinsamen insbesondere horizontalen Ebene des in Figur 1 gezeigten Möbelelementes 1. Zugleich bilden die jeweils ersten Abschnitte 12 der Verbindungselemente 6, 7 einen Anschlag für die das in Figur 1 gezeigte Bein 4 sowie die Zargen 2, 3 des Möbelelementes 1, so dass deren relative Position definiert ist. Die Krafteinleitung in die Zargen 2, 3 bei einer möglichen Belastung des Möbelelementes 1 erfolgt dabei mittels des Beines 4, so dass die Verbindung der Verbindungselemente 6, 7 im Bereich der Aussparungen 14 im wesentlichen die Position definiert und lediglich nachrangig für die Belastbarkeit des Verbindungsteiles 5 von Bedeutung ist.

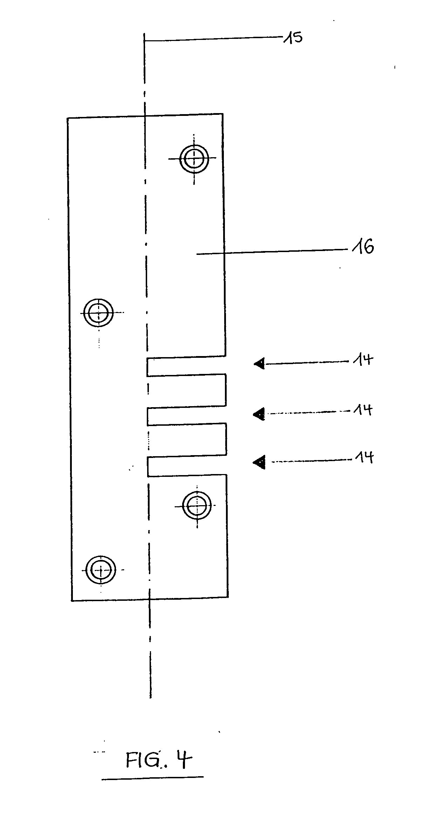

Eine abgewandelte Form eines mit dem in Figur 2 gezeigten Verbindungselementes 6 kombinierbaren Verbindungselementes 16 zeigt Figur 4 in einer Draufsicht. Zu erkennen sind mehrere parallel angeordnete schlitzförmige Aussparungen 14 mit übereinstimmenden Abmessungen. Das derart ausgeführte Verbindungselement 16 gestattet wahlweise unterschiedliche Kombinationen und ist damit insbesondere für unterschiedliche Querschnittsformen verschiedener Beine geeignet.

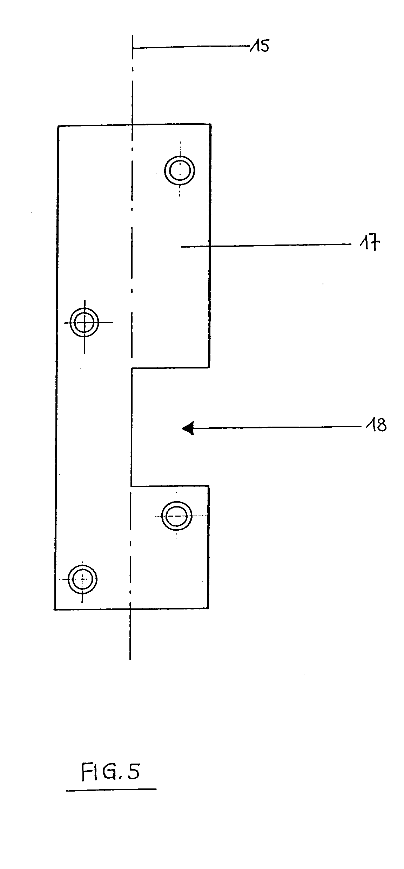

In ähnlicher Weise ermöglicht auch eine in Figur 5 gezeigte Bauform eines mit den in den Figuren 2 oder 4 gezeigten Verbindungselementen 6, 16 kombinierbaren weiteren Verbindungselementes 17 eine Fixierung unterschiedlicher Beinformen und -Geometrien, wobei eine großflächige Aussparung 18 eine stufenlose Anpassung an beliebige Abmessungen innerhalb der durch die Extremlagen der Aussparung 18 festgelegten Grenzen gestattet.

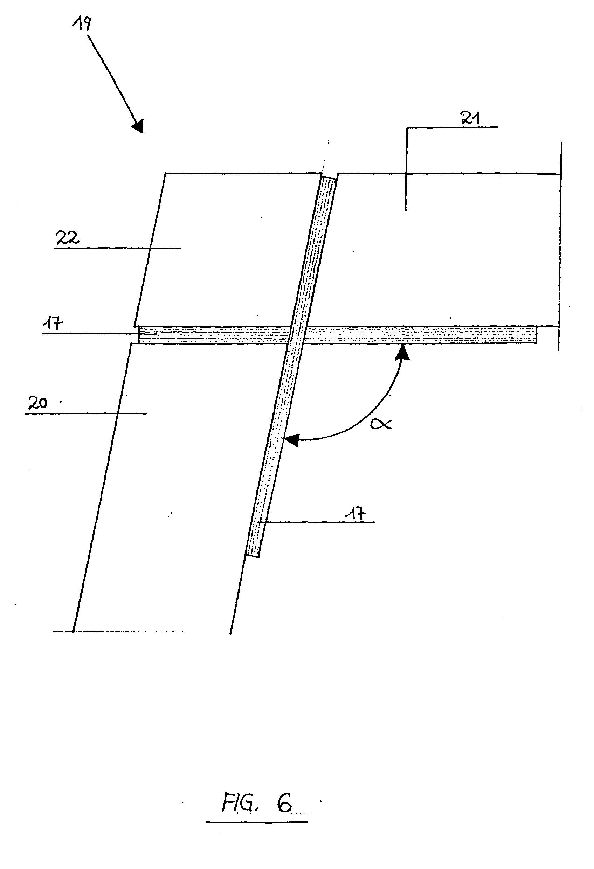

Insbesondere die Kombination von zwei baugleichen, in Figur 5 gezeigten Verbindungselementen 18 ermöglicht eine in Figur 6 in einer Prinzipdarstellung gezeigte weitere Bauform eines erfindungsgemäßen Möbelelementes 19. Dabei weicht der durch die relative Position der Verbindungselemente 17 eingeschlossene Winkel α von 90° ab und ermöglicht hierdurch einen flexiblen Einsatz des Verbindungselementes 17 bei unterschiedlichsten Möbelformen. Die Belastbarkeit des Möbelelementes 19 wird durch den abweichenden Winkel α dieser Bauform nicht beeinflusst, weil hierfür lediglich die Fixierung jedes Verbindungselementes 17 an einer jeweiligen Zarge 20, 21 einerseits und einem Bein 22 andererseits bestimmend ist.

## Patentansprüche

1. Ein insbesondere als Tisch oder Stuhl ausgeführtes und insbesondere mit horizontalen Zargen ausgestattetes Möbelelement (1, 19), welches mit zumindest einem an einer Ecke des Möbelelementes (1, 19) angeordneten, durch ein Verbindungsteil (5) fixierten Bein (4, 22) ausgestattet ist, wobei das Verbindungsteil (5) durch zwei flache, jeweils einer der beiden Zargen (2, 3, 20, 21) zugeordnete Verbindungselemente (6, 7, 16, 17) gebildet ist, die jeweils eine erste Fixierung (10) für das Bein (4, 22) sowie eine zweite Fixierung (11) für die jeweils zugeordnete Zarge (2, 3, 20, 21) aufweisen, wobei die beiden Verbindungselemente (6, 7, 16, 17) einen zwischen der jeweils anderen Zarge (2, 3, 20, 21) und dem Bein (4, 22) positionierten ersten Abschnitt (12) und einen, dem ersten Abschnitt (12) abgewandten zweiten Abschnitt (13) mit jeweils einer Aussparung (14, 18) aufweisen, mit welcher die beiden Verbindungselemente (6, 7, 16, 17) ineinander greifen.

2. Möbelelement (1) nach Anspruch 1, **dadurch gekennzeichnet, dass** die Aussparung (14) schlitzförmig ausgeführt und entsprechend der Materialsstärke des jeweils anderen Verbindungselementes (6, 7, 16) bemessen ist.

3. Möbelelement (1, 19) nach den Ansprüchen 1 oder 2, **dadurch gekennzeichnet, dass** die Verbindungselemente (6, 7, 16, 17) in einer gemeinsamen, zu der Ebene der Zargen (2, 3, 20, 21) parallelen Ebene angeordnet sind.

4. Möbelelement (1, 19) nach zumindest einem der vorhergehenden Ansprüche, **dadurch gekennzeichnet, dass** die Aussparung (14, 18) im Wesentlichen bis zur Längsmittelachse (15) des Verbindungselementes (6, 7, 16 ,17) reicht.

5. Möbelelement (1) nach zumindest einem der vorhergehenden Ansprüche, **dadurch gekennzeichnet, dass** die Verbindungselemente (6, 7, 16) mit ihren Aussparungen (14) formschlüssig ineinander greifen.

6. Möbelelement (1, 19) nach zumindest einem der vorhergehenden Ansprüche, **dadurch gekennzeichnet, dass** die Verbindungselemente (6, 7, 16, 17) übereinstimmend ausgeführt sind.

7. Möbelelement (1) nach zumindest einem der vorhergehenden Ansprüche, **dadurch gekennzeichnet, dass** zumindest eines der Verbindungselemente (16) mehrere parallele Aussparungen aufweist.

8. Möbelelement (1, 19) nach zumindest einem der vorhergehenden Ansprüche, **dadurch gekennzeichnet, dass** zumindest eines der Verbindungselemente (6, 7, 16, 17) mit einer Stirnseite des ersten Abschnitts (12) derart positioniert ist, dass diese mit einer Außenseite des Beines (4, 22) sowie der das jeweilige Verbindungselement (6, 7, 16, 17) einschließenden Zarge (2, 3, 20, 21) konturbündig abschließt.

9. Möbelelement (1) nach zumindest einem der vorhergehenden Ansprüche, **dadurch gekennzeichnet, dass** sich die Verbindungselemente (6, 7, 16, 17) im Bereich der Aussparungen (14, 18) in einem 90°-Winkel kreuzen.

10. Möbelelement (1, 19) nach zumindest einem der vorhergehenden Ansprüche, **dadurch gekennzeichnet**, die Verbindungselemente (6, 7, 16, 17) eine dem Querschnittskontur der jeweiligen Zarge (2, 3, 20, 21 ) entsprechende Formgebung aufweisen.
